# EUROPÄISCHE PATENTANMELDUNG

(11) **EP 2 779 763 A1**
(43) Veröffentlichungstag der Anmeldung: **17.09.2014**
(21) Anmeldenummer: 13197110.3
(22) Anmeldetag: 13.12.2013
(51) Int. Cl.: H04W 68/00, H04W 76/02, H04W 92/14

(54) **Verfahren zur Verbesserung der Dienstgüte eines Telekommunikationsnetzes, insbesondere eines Mobilfunkkommunikationsnetzes, Telekommunikationsnetz, Computerprogramm und Computerprogrammprodukt**

(30) Priorität: 14.02.2013 DE 102013002455
(71) Anmelder: Deutsche Telekom AG, 53113 Bonn (DE)
(72) Erfinder: Paetel, Lars, 53604 Bad Honnef (DE)
(74) Vertreter: Schwöbel, Thilo K.

(57) **Zusammenfassung**

Es wird ein Verfahren und ein Telekommunikationsnetz zur Verbesserung der Dienstgüte eines Telekommunikationsnetzes vorgeschlagen, wobei ein Telekommunikationsendgerät mit dem Telekommunikationsnetz verbunden ist, wobei das Telekommunikationsnetz ein zelluläres Telekommunikationsnetz ist und wenigstens eine Funkzelle, wenigstens eine Basisstation, wenigstens eine Mobilfunkvermittlungsstelle - MSC, Mobile Switching Center-und wenigstens eine GPRS-Paketdatenvermittlungsstelle - SGSN, Serving GPRS (General Packet Radio System) Support Node - aufweist, wobei die Basisstation mit dem Telekommunikationsendgerät verbunden ist und wobei zwischen der Mobilfunkvermittlungsstelle und der Basisstation eine A-Schnittstellen-Verbindung existiert, wobei im Fall dass
-- eine Datenverbindung zwischen dem Telekommunikationsendgerät und dem Telekommunikationsnetz über die GPRS-Paketdatenvermittlungsstelle aufgebaut ist und währenddessen eine auf das Telekommunikationsendgerät bezogene leitungsvermittelte Funkrufsignalisierung - MTC paging, Mobile Terminated Call paging - erfolgt und
-- das Telekommunikationsendgerät ein zur Implementierung des DTM-Modus (Dual Transfer Mode) fähiges Telekommunikationsendgerät ist,

die auf das Telekommunikationsendgerät bezogene leitungsvermittelte Funkrufsignalisierung unter Benutzung der A-Schnittstellen-Verbindung erfolgt.

## Beschreibung

### Stand der Technik

Die Erfindung betrifft ein Verfahren und ein Telekommunikationsnetz zur Verbesserung der Dienstgüte eines Telekommunikationsnetzes, insbesondere ein Mobilfunkkommunikationsnetz, wobei das Telekommunikationsendgerät mit dem Telekommunikationsnetz verbunden ist.

In derzeitigen Mobilfunk-Telekommunikationsnetzen, insbesondere Mobilfunk-Telekommunikationsnetzen der zweiten Generation wie etwa GSM-Telekommunikationsnetzen (Global System for Mobile Communications), die sowohl leitungsvermittelte Dienste anbieten (bzw. leitungsvermittelte Funktionalitäten aufweisen) als auch paketvermittelte Dienste anbieten (bzw. paketvermittelte Funktionalitäten aufweisen, insbesondere in Form eines GPRS-Telekommunikationsnetzes (General Packet Radio System), liegt die Situation vor, dass solche Telekommunikationsendgeräte (d.h. mobile Geräte, insbesondere tragbare Endgeräte), welche über eine duale Übertragungsmodusfunktionalität - DTM, Dual Transfer Mode - nicht verfügen, für eine auf das Telekommunikationsendgerät bezogene leitungsvermittelte Funkrufsignalisierung - MTC paging, Mobile Terminated Call paging - nicht erreichbar sind, solange eine aktive Paketdatenprotokollkontext-Sitzung - PDP context session, Packet Data Protocol context session - vorhanden ist.

Um eine Lösung im Sinne einer Erreichbarkeit (durch leitungsvermittelte Funkrufsignalisierung) solcher Telekommunikationsendgeräte in einer solchen Situation zu schaffen, wurde vorgeschlagen, die sogenannte Gs-Schnittstelle zwischen der (für die leitungsvermittelte Datenübertragung zum Telekommunikationsendgerät zuständigen) Mobilfunkvermittlungsstelle (MSC) einerseits und der (für die paketvermittelte Datenübertragung zum Telekommunikationsendgerät zuständigen) GPRS-Paketdatenvermittlungsstelle (SGSN) einzurichten. Hierdurch ist es möglich, eine leitungsvermittelte Funkrufsignalisierung in Form eines MTC paging (Mobile Terminated Call paging) auch für den Fall zu realisieren, dass eine aktive Paketdatenprotokollkontext-Sitzung vorhanden ist, weil die leitungsvermittelte Funkrufsignalisierung in diesem Fall (unter Benutzung der Gs-Schnittstellen-Verbindung) durch die GPRS-Paketdatenvermittlungsstelle (im Gegensatz zur Mobilfunkvermittlungsstelle) ausgeführt wird, die auch bereits die Paketdatenprotokollkontext-Sitzung steuert.

Allerdings liegt in Fällen von Telekommunikationsendgeräten mit einer dualen Übertragungsmodusfunktionalität, die also über die DTM-Funktionalität verfügen, die Situation vor, dass die Gs-Schnittstelle für die leitungsvermittelte Funkrufsignalisierung, insbesondere MTC (Mobile Terminated Call) paging, aktiviert ist und somit die duale Übertragungsmodusfunktionalität bzw. DTM-Funktionalität des Telekommunikationsendgeräts gar nicht genutzt wird, weil die leitungsvermittelte Funkrufsignalisierung in diesem Fall (unter Benutzung der Gs-Schnittstellen-Verbindung) durch die GPRS-Paketdatenvermittlungsstelle ausgeführt wird. Dies ist in der Regel deshalb der Fall, weil im Besucherortsregister - VLR, Visitor Location Register -, welches der Mobilfunkvermittlungsstelle zugeordnet ist, eine Information über die Benutzung der Gs-Schnittstelle hinterlegt ist, die von der DTM-Funktionalität des Telekommunikationsendgeräts unabhängig ist.

Dies hat die nachteilige Wirkung einer vergleichsweise häufigen Verwendung der Gs-Schnittstelle (sowohl für solche Telekommunikationsendgeräte mit als auch ohne DTM-Funktionalität), was zu einer Erhöhung des Signalisierungsverkehrs von der Mobilfunkvermittlungsstelle zur GPRS-Paketdatenvermittlungsstelle und zu einer höheren Belastung der GPRS-Paketdatenvermittlungsstelle führt. Ferner ist die Benutzung der Gs-Schnittstelle für ein Routen der Verkehrsdaten in der Praxis typischerweise mit einer höheren Wahrscheinlichkeit instabil und führt zu einem größeren Zeitbedarf zum Rufaufbau, insbesondere für den Fall, dass sich der Ort des Telekommunikationsendgeräts ändert, so dass durch die größere Instabilität und die größere durchschnittliche Rufaufbauzeit die Dienstgüte des Telekommunikationsnetzes in Bezug auf das Telekommunikationsendgerät vermindert wird.

### Offenbarung der Erfindung

Der Erfindung liegt daher die Aufgabe zugrunde, ein Verfahren und ein Telekommunikationsnetz zur Verbesserung der Dienstgüte eines Telekommunikationsnetzes zur Verfügung zu stellen, wobei ein Telekommunikationsendgerät mit dem Telekommunikationsnetz verbunden ist und sowohl für den Fall dass das Telekommunikationsendgerät die DTM-Funktionalität aufweist, als auch für den Fall, dass das Telekommunikationsendgerät die DTM-Funktionalität nicht aufweist, im Falle einer aktiven Datenverbindung zwischen dem Telekommunikationsendgerät und dem Telekommunikationsnetz eine möglichst optimale leitungsvermittelte Funkrufsignalisierung durchgeführt wird, so dass in einfacher Weise die Stabilität und Robustheit der leitungsvermittelten Funkrufsignalisierung und damit auch die Dienstgüte des Telekommunikationsnetz erhöht werden kann.

Diese Aufgabe wird erfindungsgemäß gelöst durch ein Verfahren zur Verbesserung der Dienstgüte eines Telekommunikationsnetzes, insbesondere ein Mobilfunkkommunikationsnetz, wobei ein Telekommunikationsendgerät mit dem Telekommunikationsnetz verbunden ist, wobei das Telekommunikationsnetz ein zelluläres Telekommunikationsnetz ist und wenigstens eine Funkzelle, wenigstens eine Basisstation, wenigstens eine Mobilfunkvermittlungsstelle - MSC, Mobile Switching Center - und wenigstens eine GPRS-Paketdatenvermittlungsstelle - SGSN, Serving GPRS (General Packet Radio System) Support Node - aufweist, wobei die Basisstation mit dem Telekommunikationsendgerät verbunden ist und wobei zwischen der Mobilfunkvermittlungsstelle und der Basisstation eine A-Schnittstellen-Verbindung existiert, wobei im Fall dass
-- eine Datenverbindung zwischen dem Telekommunikationsendgerät und dem Telekommunikationsnetz über die GPRS-Paketdatenvermittlungsstelle aufgebaut ist und währenddessen eine auf das Telekommunikationsendgerät bezogene leitungsvermittelte Funkrufsignalisierung - MTC paging, Mobile Terminated Call paging - erfolgt und
-- das Telekommunikationsendgerät ein zur Implementierung des DTM-Modus (Dual Transfer Mode) fähiges Telekommunikationsendgerät ist,
die auf das Telekommunikationsendgerät bezogene leitungsvermittelte Funkrufsignalisierung unter Benutzung der A-Schnittstellen-Verbindung erfolgt.

Erfindungsgemäß wird damit die leitungsvermittelte Funkrufsignalisierung für den Fall, dass eine aktive Datenverbindung zwischen dem Telekommunikationsendgerät und dem Telekommunikationsnetz - insbesondere eine aktive Paketdatenprotokollkontext-Sitzung, PDP context session (Packet Data Protocol context session) - besteht, zumindest für den Fall, dass das Telekommunikationsendgerät DTM-fähig ist, effizienter und robuster an die Basisstation des Telekommunikationsendgeräts weitergeleitet (bzw. geroutet), die Rufaufbauzeiten somit verkürzt und daher die Dienstgüte des Telekommunikationsnetz erhöht. Diese leitungsvermittelte Funkrufsignalisierung erfolgt unter Benutzung der A-Schnittstellen-Verbindung, d.h. insbesondere ohne Benutzung der Gb-Schnittstellen-Verbindung zwischen der GPRS-Paketdatenvermittlungsstelle und der Basisstation und/oder ohne Benutzung der Gs-Schnittstellen-Verbindung zwischen der GPRS-Paketdatenvermittlungsstelle und der Mobilfunkvermittlungsstelle).

Durch die vorgeschlagene Verwendung der A-Schnittstellen-Verbindung im Fall einer leitungsvermittelten Funkrufsignalisierung bei aktiver Datenverbindung eines DTM-fähigen Telekommunikationsendgeräts ist es erfindungsgemäß vorteilhaft möglich, dass die Vorteile sowohl der Implementierung der leitungsvermittelten Funkrufsignalisierung über die A-Schnittstellen-Verbindung und die Steuerung der leitungsvermittelten Funkrufsignalisierung durch die Basisstation bzw. das Basisstationssubsystem (BSS, base station subsystem) realisiert werden können, als auch (für den Fall eines zur DTM-Funktionalität nicht fähigen Telekommunikationsendgeräts) die Vorteile der leitungsvermittelten Funkrufsignalisierung über die Gs-Schnittstellen-Verbindung realisiert werden können. Ferner ist es erfindungsgemäß vorteilhaft möglich, dass im Fall von DTM-fähigen Telekommunikationsendgeräten die Verwendung von komplexen IMSI Hashtabellen (IMSI hash tables) in der GPRS-Paketdatenvermittlungsstelle (SGSN) vermieden werden kann bzw. deren Verwendung verringert werden kann, insbesondere in der MSS pooling configuration.

Die vorliegende Erfindung wird insbesondere mit Blick auf bzw. am Beispiel von GPRS, einer Erweiterung des GSM-Standards, beschrieben. Erfindungsgemäß ist es bevorzugt vorgesehen, dass zum Aufbau der Datenverbindung zwischen dem Telekommunikationsendgerät und dem Telekommunikationsnetz zwischen der GPRS-Paketdatenvermittlungsstelle und der Basisstation eine Gb-Schnittstellen-Verbindung existiert, wobei im Fall dass
-- eine Datenverbindung zwischen dem Telekommunikationsendgerät und dem Telekommunikationsnetz über die GPRS-Paketdatenvermittlungsstelle aufgebaut ist und währenddessen eine auf das Telekommunikationsendgerät bezogene leitungsvermittelte Funkrufsignalisierung erfolgt und
-- das Telekommunikationsendgerät ein zur Implementierung des DTM-Modus (Dual Transfer Mode) unfähiges Telekommunikationsendgerät ist,
die auf das Telekommunikationsendgerät bezogene leitungsvermittelte Funkrufsignalisierung unter Benutzung der Gb-Schnittstelle-Verbindung erfolgt.

Hierdurch wird für solche Telekommunikationsendgeräte, die keine DTM-Funktionalität aufweisen, im Fall einer aktiven Datenverbindung die leitungsvermittelte Funkrufsignalisierung unter aktiver Steuerung durch die GPRS-Paketdatenvermittlungsstelle und über die Gs-Schnittstellen-Verbindung zur Mobilfunkvermittlungsstelle (bzw. zum Besucherortsregister) bzw. über die Gb-Schnittstellen-Verbindung zur Basisstation durchgeführt.

Erfindungsgemäß ist es darüber hinaus auch möglich und bevorzugt, dass das Telekommunikationsnetz ein der Mobilfunkvermittlungsstelle zugeordnetes Besucherortsregister - VLR, Visitor Location Register - aufweist, wobei das Besucherortsregister, bezogen auf das Telekommunikationsendgerät eine DTM-Information aufweist, wobei aus der DTM-Information ableitbar ist, ob das Telekommunikationsendgerät ein zur Implementierung des DTM-Modus (Dual Transfer Mode) fähiges Telekommunikationsendgerät ist.

Mittels einer solchen DTM-Information, die im Besucherortsregister hinterlegt ist, ist es erfindungsgemäß vorteilhaft möglich, dass in einfacher Weise und zeitnah (nach dem Eingang einer Nachricht über die Notwendigkeit einer leitungsvermittelten Funkrufsignalisierung) ermittelt werden kann, ob die leitungsvermittelte Funkrufsignalisierung unter Benutzung der A-Schnittstellen-Verbindung (im Fall eines DTM-fähigen Telekommunikationsendgeräts) oder unter Benutzung der Gb-Schnittstellen-Verbindung (im Fall eines nicht DTM-fähigen Telekommunikationsendgeräts) durchgeführt werden soll. Im Besucherortsregister wird bevorzugt, die DTM-Information beispielsweise in Form der DTM-Fähigkeiten des Telekommunikationsendgeräts gespeichert, etwa im temporären Teilnehmer Profil (temporary subscriber profile) im Besucherortsregister.

Erfindungsgemäß ist es ferner bevorzugt vorgesehen, dass zwischen der GPRS-Paketdatenvermittlungsstelle und der Mobilfunkvermittlungsstelle eine Gs-Schnittstellen-Verbindung existiert, wobei über die Gs-Schnittstellen-Verbindung die DTM-Information zur GPRS-Paketdatenvermittlungsstelle übertragen wird.

Besonders bevorzugt ist es gemäß der vorliegenden Erfindung ferner, dass die DTM-Information der GPRS-Paketdatenvermittlungsstelle mittels einer Routing-Gebiet-Aktualisierungsanforderungsnachricht - Routing Area Update Request message - oder mittels einer Verbindungsanforderungsnachricht - Attach Request message - übertragen wird, insbesondere über die Gs-Schnittstellen-Verbindung.

Hierdurch ist es erfindungsgemäß in vorteilhafter Weise möglich, dass in der GPRS-Paketdatenvermittlungsstelle nach der Durchführung einer Routing-Gebiet-Aktualisierung (bzw. nach der Durchführung eines Routing Area Update) die DTM-Information bezüglich des Telekommunikationsendgeräts vorliegt. Falls das Telekommunikationsendgerät als DTM-fähig erkannt wird, erfolgt bei einer leitungsvermittelte Funkrufsignalisierung erfindungsgemäß eine Unterdrückung eines kombinierten Orts-Aktialisierungsvorgangs (combined location update procedure) in Bezug auf das Besucherortsregister. Falls das Telekommunikationsendgerät als nicht DTM-fähig erkannt wird, erfolgt bei einer leitungsvermittelte Funkrufsignalisierung erfindungsgemäß keine Unterdrückung eines kombinierten Orts-Aktialisierungsvorgangs (combined location update procedure) in Bezug auf das Besucherortsregister, sondern es wird gemäß des GSM-Standards eine solche kombinierte Orts-Aktualisierung durchgeführt und die leitungsvermittelte Funkrufsignalisierung über die Gs-Schnittstellen-Verbindung bzw. die Gb-Schnittstellen-Verbindung durchgeführt.

Insbesondere ist es erfindungsgemäß bevorzugt vorgesehen, dass im Fall dass eine Datenverbindung zwischen dem Telekommunikationsendgerät und dem Telekommunikationsnetz über die GPRS-Paketdatenvermittlungsstelle aufgebaut ist und währenddessen eine auf das Telekommunikationsendgerät bezogene leitungsvermittelte Funkrufsignalisierung erfolgt, in Abhängigkeit der DTM-Information die auf das Telekommunikationsendgerät bezogene leitungsvermittelte Funkrufsignalisierung
-- unter Benutzung der A-Schnittstellen-Verbindung oder
-- unter Benutzung der Gb-Schnittstelle-Verbindung
erfolgt.

Weiterhin ist es erfindungsgemäß bevorzugt, dass die DTM-Information Teil eines Classmark-Parametersatzes ist, wobei aus dem Classmark-Parametersatz ableitbar ist, ob das Telekommunikationsendgerät ein zur Implementierung des DTM-Modus (Dual Transfer Mode) fähiges Telekommunikationsendgerät ist.

Hierdurch kann die DTM-Information in einfacher Weise im Besucherortsregister gespeichert und ebenfalls in einfacher Weise abgerufen bzw. abgefragt werden.

Ein weiterer Gegenstand der vorliegenden Erfindung ist ein Telekommunikationsnetz, insbesondere Mobilfunkkommunikationsnetz, konfiguriert für eine verbesserte Dienstgüte, wobei ein Telekommunikationsendgerät mit dem Telekommunikationsnetz verbunden ist, wobei das Telekommunikationsnetz ein zelluläres Telekommunikationsnetz ist und wenigstens eine Funkzelle, wenigstens eine Basisstation, wenigstens eine Mobilfunkvermittlungsstelle - MSC, Mobile Switching Center - und wenigstens eine GPRS-Paketdatenvermittlungsstelle - SGSN, Serving GPRS (General Packet Radio System) Support Node - aufweist, wobei die Basisstation mit dem Telekommunikationsendgerät verbunden ist und wobei zwischen der Mobilfunkvermittlungsstelle und der Basisstation eine A-Schnittstellen-Verbindung existiert, wobei das Telekommunikationsnetz derart konfiguriert ist, dass im Fall dass
-- eine Datenverbindung zwischen dem Telekommunikationsendgerät und dem Telekommunikationsnetz über die GPRS-Paketdatenvermittlungsstelle aufgebaut ist und währenddessen eine auf das Telekommunikationsendgerät bezogene leitungsvermittelte Funkrufsignalisierung - MTC paging, Mobile Terminated Call paging - erfolgt und
-- das Telekommunikationsendgerät ein zur Implementierung des DTM-Modus (Dual Transfer Mode) fähiges Telekommunikationsendgerät ist,
die auf das Telekommunikationsendgerät bezogene leitungsvermittelte Funkrufsignalisierung unter Benutzung der A-Schnittstellen-Verbindung erfolgt.

Ein solches erfindungsgemäßes Telekommunikationsnetz ist in der Lage, mit gleichem oder geringerem Aufwand an Infrastrukturressourcen bzw. Netzressourcen im Durchschnitt eine bessere Dienstgüte, insbesondere gegenüber solchen Telekommunikationsendgeräten zu realisieren, die die DTM-Funktionalität aufweisen.

Bevorzugt ist es erfindungsgemäß vorgesehen, dass zum Aufbau der Datenverbindung zwischen dem Telekommunikationsendgerät und dem Telekommunikationsnetz zwischen der GPRS-Paketdatenvermittlungsstelle und der Basisstation eine Gb-Schnittstellen-Verbindung existiert, wobei das Telekommunikationsnetz derart konfiguriert ist, dass im Fall dass
-- eine Datenverbindung zwischen dem Telekommunikationsendgerät und dem Telekommunikationsnetz über die GPRS-Paketdatenvermittlungsstelle aufgebaut ist und währenddessen eine auf das Telekommunikationsendgerät bezogene leitungsvermittelte Funkrufsignalisierung erfolgt und
-- das Telekommunikationsendgerät ein zur Implementierung des DTM-Modus (Dual Transfer Mode) unfähiges Telekommunikationsendgerät ist,
die auf das Telekommunikationsendgerät bezogene leitungsvermittelte Funkrufsignalisierung unter Benutzung der Gb-Schnittstelle-Verbindung erfolgt.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer Netzeinheit eines Telekommunikationsnetzes, einem Computer oder einer entsprechenden Recheneinheit ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer Netzeinheit eines Telekommunikationsnetzes, einem Computer oder einer entsprechenden Recheneinheit ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

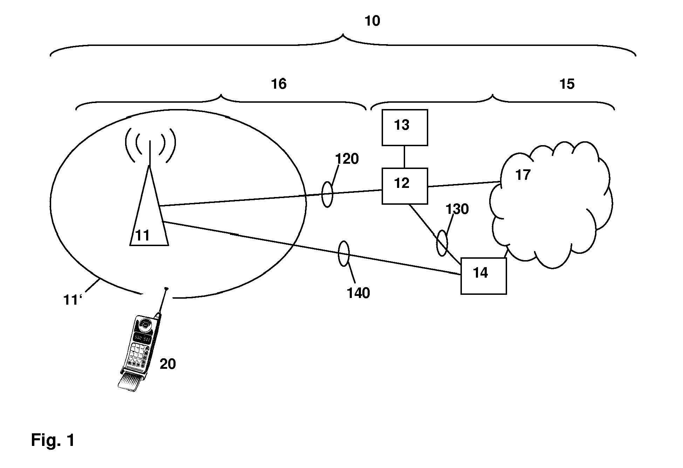

- Figur 1: zeigt eine schematische Ansicht eines Telekommunikationsnetzes und eines Telekommunikationsendgeräts.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figur 1 ist schematisch eine Ansicht eines Telekommunikationsnetz 10 und eines Telekommunikationsendgeräts 20 dargestellt. Das Mobilfunk-Telekommunikationsnetz 10 weist einen Kernnetzanteil 15 (core network) und einen Zugangsnetzanteil 16 auf, wobei das Kernnetz 15 mit dem Zugangsnetz 16 in Verbindung steht, um Anfragen nach Telekommunikationskontakten des Telekommunikationsendgeräts 20 zu ermöglichen und generell den Betrieb des Telekommunikationsnetzes 10 insgesamt zu ermöglichen.

Ferner weist das Telekommunikationsnetz 10 eine Basisstationseinheit 11 bzw. eine Basisstation 11 auf. Die Basisstation 11 ist zur Versorgung einer Funkzelle 11' oder einer Mehrzahl von Funkzellen vorgesehen. Die Funkzelle 11' oder die Mehrzahl von Funkzellen decken in der Regel ein bestimmtes geographisches Gebiet ab. Die Basisstation 11 kann auch als sogenanntes BSS, base station subsystem bzw. Basisstationssubsystem aufgefasst werden und eine Mehrzahl von Basisstationen sowie eine zugeordnete Steuereinheit bzw. eine Mehrzahl von Steuereinheiten umfassen. Ferner weist das Telekommunikationsnetz 10 eine Mobilfunkvermittlungsstelle 12 (für leitungsvermittelten Verkehr) auf, eine sogenannte MSC, mobile switching center gemäß dem GSM-Standard. Mit der Mobilfunkvermittlungsstelle 12 ist ein Besucherortsregister 13 verbunden, d.h. ein VLR, visitor location register, gemäß dem GSM-Standard. Das Mobilfunk-Telekommunikationsnetz 10 weist das Kernnetz (core network) 15 auf, wobei das Kernnetz 15 mit dem Zugangsnetz 16 verbunden ist, um den Betrieb des Mobilfunk-Telekommunikationsnetzes 10 insgesamt zu ermöglichen. Das Telekommunikationsnetz 10 weist ferner eine GPRS-Paketdatenvermittlungsstelle 14 auf, d.h. ein SGSN, Serving GPRS Support Node, wobei der SGSN 14 über eine separate Teilnehmer Datenbank verfügt, insbesondere für die temporäre Profilspeicherung und die Speicherung von Endgerätemerkmalen. Die Mobilfunkvermittlungsstelle 12 und die GPRS-Paketdatenvermittlungsstelle 14 sind mit weiteren Netzwerkeinheiten bzw. Netzentitäten des Telekommunikationsnetz 10 verbunden, die nicht näher bezeichnet und zusammenfassend mit dem Bezugszeichen 17 und einer Netzdarstellung in Figur 1 dargestellt sind. Zwischen der GPRS-Paketdatenvermittlungsstelle 14 und der Mobilfunkvermittlungsstelle 12 ist eine Gs-Schnittstellen-Verbindung 130 (Gs-Interface, Gs reference point) vorgesehen. Zwischen der GPRS-Paketdatenvermittlungsstelle 14 und der Basisstation 11 (bzw. dem Basisstationssubsystem (BSS) 11) existiert eine Gb-Schnittstellen-Verbindung 140 (Gb-Interface, Gb reference point). Zwischen der Mobilfunkvermittlungsstelle 12 und der Basisstation 11 (bzw. dem Basisstationssubsystem (BSS) 11) existiert eine A-Schnittstellen-Verbindung 120 (A-Interface, A reference point).

Erfindungsgemäß ist für den Fall, dass eine aktive Datenverbindung zwischen dem Telekommunikationsendgerät 20 und dem Telekommunikationsnetz 10 besteht und eine dem Telekommunikationsendgerät 20 zugeordnete leitungsvermittelte Funkrufsignalisierung, ein sogenanntes auf das Telekommunikationsendgerät 20 bezogenes MTC-paging, erfolgt, eine Weiterleitung der leitungsvermittelten Funkrufsignalisierung
-- dann über die A-Schnittstellen-Verbindung 120 (insbesondere ausschließlich über die A-Schnittstellen-Verbindung, d.h. nicht unter Verwendung der Gb-Schnittstellen-Verbindung 140) vorgesehen, wenn das Telekommunikationsendgerät 20 die DTM-Funktionalität aufweist (bzw. im Telekommunikationsnetz 10, insbesondere in der GPRS-Paketdatenvermittlungsstelle 14, als die DTM-Funktionalität aufweisend bekannt ist) und
-- dann über die Gb-Schnittstellen-Verbindung 140 vorgesehen, wenn das Telekommunikationsendgerät 20 die DTM-Funktionalität nicht aufweist (bzw. im Telekommunikationsnetz 10, insbesondere in der GPRS-Paketdatenvermittlungsstelle 14, als die DTM-Funktionalität nicht aufweisend bekannt ist).

Erfindungsgemäß ist es insbesondere bevorzugt, dass die Kenntnis, ob ein bestimmtes Telekommunikationsendgerät (im Zuständigkeitsbereich der GPRS-Paketdatenvermittlungsstelle 14) die DTM-Funktionalität aufweist oder nicht, mittels einer DTM-Information im Besucherortsregister 13, insbesondere im temporären Teilnehmerprofil (temporary subscriber profile) des Besucherortsregisters 13 gespeichert wird und im Zuge der Anmeldung des Telekommunikationsendgeräts 20 am Telekommunikationsnetz 10 (insbesondere im Zuge der Attach-Prozedur, attach procedure) übertragen wird. Die DTM-Information wird hierbei erfindungsgemäß insbesondere mittels wenigstens eines Teils eines Classmark-Parametersatzes übertragen, wobei aus dem Classmark-Parametersatz ableitbar ist, ob das Telekommunikationsendgerät 20 ein zur Implementierung des DTM-Modus (Dual Transfer Mode) fähiges (d.h. die DTM-Funktionalität aufweisendes) Telekommunikationsendgerät ist oder nicht.

## Patentansprüche

1. Verfahren zur Verbesserung der Dienstgüte eines Telekommunikationsnetzes (10), insbesondere ein Mobilfunkkommunikationsnetz, wobei ein Telekommunikationsendgerät (20) mit dem Telekommunikationsnetz (10) verbunden ist, wobei das Telekommunikationsnetz (10) ein zelluläres Telekommunikationsnetz (10) ist und wenigstens eine Funkzelle (11'), wenigstens eine Basisstation (11), wenigstens eine Mobilfunkvermittlungsstelle (12) - MSC, Mobile Switching Center - und wenigstens eine GPRS-Paketdatenvermittlungsstelle (14) - SGSN, Serving GPRS (General Packet Radio System) Support Node - aufweist, wobei die Basisstation (11) mit dem Telekommunikationsendgerät (20) verbunden ist und wobei zwischen der Mobilfunkvermittlungsstelle (12) und der Basisstation (11) eine A-Schnittstellen-Verbindung (120) existiert, wobei im Fall dass
-- eine Datenverbindung zwischen dem Telekommunikationsendgerät (20) und dem Telekommunikationsnetz (10) über die GPRS-Paketdatenvermittlungsstelle (14) aufgebaut ist und währenddessen eine auf das Telekommunikationsendgerät (20) bezogene leitungsvermittelte Funkrufsignalisierung - MTC paging, Mobile Terminated Call paging - erfolgt und
-- das Telekommunikationsendgerät (20) ein zur Implementierung des DTM-Modus (Dual Transfer Mode) fähiges Telekommunikationsendgerät (20) ist,
die auf das Telekommunikationsendgerät (20) bezogene leitungsvermittelte Funkrufsignalisierung unter Benutzung der A-Schnittstellen-Verbindung (120) erfolgt.

2. Verfahren nach Anspruch 1, **dadurch gekennzeichnet, dass** zum Aufbau der Datenverbindung zwischen dem Telekommunikationsendgerät (20) und dem Telekommunikationsnetz (10) zwischen der GPRS-Paketdatenvermittlungsstelle (14) und der Basisstation (11) eine Gb-Schnittstellen-Verbindung (140) existiert, wobei im Fall dass
-- eine Datenverbindung zwischen dem Telekommunikationsendgerät (20) und dem Telekommunikationsnetz (10) über die GPRS-Paketdatenvermittlungsstelle (14) aufgebaut ist und währenddessen eine auf das Telekommunikationsendgerät (20) bezogene leitungsvermittelte Funkrufsignalisierung erfolgt und
-- das Telekommunikationsendgerät (20) ein zur Implementierung des DTM-Modus (Dual Transfer Mode) unfähiges Telekommunikationsendgerät (20) ist,
die auf das Telekommunikationsendgerät (20) bezogene leitungsvermittelte Funkrufsignalisierung unter Benutzung der Gb-Schnittstelle-Verbindung (140) erfolgt.

3. Verfahren nach einem der vorhergehenden Ansprüche, **dadurch gekennzeichnet, dass** das Telekommunikationsnetz (10) ein der Mobilfunkvermittlungsstelle (12) zugeordnetes Besucherortsregister (13) - VLR, Visitor Location Register - aufweist, wobei das Besucherortsregister (13), bezogen auf das Telekommunikationsendgerät (20) eine DTM-Information aufweist, wobei aus der DTM-Information ableitbar ist, ob das Telekommunikationsendgerät (20) ein zur Implementierung des DTM-Modus (Dual Transfer Mode) fähiges Telekommunikationsendgerät (20) ist.

4. Verfahren nach einem der vorhergehenden Ansprüche, **dadurch gekennzeichnet, dass** zwischen der GPRS-Paketdatenvermittlungsstelle (14) und der Mobilfunkvermittlungsstelle (12) eine Gs-Schnittstellen-Verbindung (130) existiert, wobei über die Gs-Schnittstellen-Verbindung (130) die DTM-Information zur GPRS-Paketdatenvermittlungsstelle (14) übertragen wird.

5. Verfahren nach einem der vorhergehenden Ansprüche, **dadurch gekennzeichnet, dass** die DTM-Information der GPRS-Paketdatenvermittlungsstelle (14) mittels einer Routing-Gebiet-Aktualisierungsanforderungsnachricht - Routing Area Update Request message - oder mittels einer Verbindungsanforderungsnachricht - Attach Request message - übertragen wird, insbesondere über die Gs-Schnittstellen-Verbindung (130).

6. Verfahren nach einem der vorhergehenden Ansprüche, **dadurch gekennzeichnet, dass** im Fall dass eine Datenverbindung zwischen dem Telekommunikationsendgerät (20) und dem Telekommunikationsnetz (10) über die GPRS-Paketdatenvermittlungsstelle (14) aufgebaut ist und währenddessen eine auf das Telekommunikationsendgerät (20) bezogene leitungsvermittelte Funkrufsignalisierung erfolgt, in Abhängigkeit der DTM-Information die auf das Telekommunikationsendgerät (20) bezogene leitungsvermittelte Funkrufsignalisierung
-- unter Benutzung der A-Schnittstellen-Verbindung (120) oder
-- unter Benutzung der Gb-Schnittstelle-Verbindung (140)
erfolgt.

7. Verfahren nach einem der vorhergehenden Ansprüche, **dadurch gekennzeichnet, dass** die DTM-Information Teil eines Classmark-Parametersatzes ist, wobei aus dem Classmark-Parametersatz ableitbar ist, ob das Telekommunikationsendgerät (20) ein zur Implementierung des DTM-Modus (Dual Transfer Mode) fähiges Telekommunikationsendgerät (20) ist.

8. Telekommunikationsnetz (10), insbesondere Mobilfunkkommunikationsnetz, konfiguriert für eine verbesserte Dienstgüte, wobei ein Telekommunikationsendgerät (20) mit dem Telekommunikationsnetz (10) verbunden ist, wobei das Telekommunikationsnetz (10) ein zelluläres Telekommunikationsnetz (10) ist und wenigstens eine Funkzelle (11'), wenigstens eine Basisstation (11), wenigstens eine Mobilfunkvermittlungsstelle (12) - MSC, Mobile Switching Center - und wenigstens eine GPRS-Paketdatenvermittlungsstelle (14) - SGSN, Serving GPRS (General Packet Radio System) Support Node - aufweist, wobei die Basisstation (11) mit dem Telekommunikationsendgerät (20) verbunden ist und wobei zwischen der Mobilfunkvermittlungsstelle (12) und der Basisstation (11) eine A-Schnittstellen-Verbindung (120) existiert, wobei das Telekommunikationsnetz (10) derart konfiguriert ist, dass im Fall dass
-- eine Datenverbindung zwischen dem Telekommunikationsendgerät (20) und dem Telekommunikationsnetz (10) über die GPRS-Paketdatenvermittlungsstelle (14) aufgebaut ist und währenddessen eine auf das Telekommunikationsendgerät (20) bezogene leitungsvermittelte Funkrufsignalisierung - MTC paging, Mobile Terminated Call paging - erfolgt und
-- das Telekommunikationsendgerät (20) ein zur Implementierung des DTM-Modus (Dual Transfer Mode) fähiges Telekommunikationsendgerät (20) ist,
die auf das Telekommunikationsendgerät (20) bezogene leitungsvermittelte Funkrufsignalisierung unter Benutzung der A-Schnittstellen-Verbindung (120) erfolgt.

9. Telekommunikationsnetz (10) nach Anspruch 8, **dadurch gekennzeichnet, dass** zum Aufbau der Datenverbindung zwischen dem Telekommunikationsendgerät (20) und dem Telekommunikationsnetz (10) zwischen der GPRS-Paketdatenvermittlungsstelle (14) und der Basisstation (11) eine Gb-Schnittstellen-Verbindung (140) existiert, wobei das Telekommunikationsnetz (10) derart konfiguriert ist, dass im Fall dass
-- eine Datenverbindung zwischen dem Telekommunikationsendgerät (20) und dem Telekommunikationsnetz (10) über die GPRS-Paketdatenvermittlungsstelle (14) aufgebaut ist und währenddessen eine auf das Telekommunikationsendgerät (20) bezogene leitungsvermittelte Funkrufsignalisierung erfolgt und
-- das Telekommunikationsendgerät (20) ein zur Implementierung des DTM-Modus (Dual Transfer Mode) unfähiges Telekommunikationsendgerät (20) ist,
die auf das Telekommunikationsendgerät (20) bezogene leitungsvermittelte Funkrufsignalisierung unter Benutzung der Gb-Schnittstelle-Verbindung (140) erfolgt.

10. Computerprogramm mit Programmcodemitteln, mit deren Hilfe alle Schritte eines Verfahrens nach einem der Ansprüche 1 bis 7 durchführbar sind, wenn das Computerprogramm auf einer Netzeinheit eines Telekommunikationsnetzes (10), einem Computer oder einer entsprechenden Recheneinheit ausgeführt wird.

11. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 7 durchführbar sind, wenn das Computerprogramm auf einer Netzeinheit eines Telekommunikationsnetz (10), einem Computer oder einer entsprechenden Recheneinheit ausgeführt wird.
